# EUROPÄISCHE PATENTSCHRIFT

(11) **EP 0 650 236 B1**
(45) Veröffentlichungstag und Bekanntmachung des Hinweises auf die Patenterteilung: **09.04.1997**
(21) Anmeldenummer: 94250248.5
(22) Anmeldetag: 12.10.1994
(51) Int. Cl.: H02B 13/065, H01F 38/34, H01F 38/28

(54) **Elektrische Hochspannungsschaltanlage mit einem Ringkernstromwandler**
Electrical high voltage switchgear with toroidal core current transformer
Appareil distributeur haute tension avec transformateur du courant à noyau toroidal

(30) Priorität: 26.10.1993 DE 4337403
(43) Veröffentlichungstag der Anmeldung: 26.04.1995
(73) Patentinhaber: SIEMENS AKTIENGESELLSCHAFT, 80333 München (DE)
(72) Erfinder: Lorenz, Dieter, D-12207 Berlin (DE); Schöps, Jürgen, D-10717 Berlin (DE)

(56) Entgegenhaltungen:
- CH-A- 627 023

## Beschreibung

Die Erfindung bezieht sich auf eine elektrische Hochspannungsschaltanlage mit einer Metallkapselung, gemäß dem Oberbegriff des Anspruchs 1. Eine derartige Hochspannungsschaltanlage ist aus CH-A- 627 023 bekannt.

Eine weitere derartige Hochspannungsschaltanlage ist aus der DE-OS 24 09 990 bekannt. Bei der bekannten Schaltanlage ist zwischen zwei Flanschen ein Kern eines Ringkern stromwandlers angeordnet, wobei die Flansche unter Zwischenlage einer Isolierschicht miteinander gasdicht verbunden sind und wobei der Stromwandler radial außerhalb der gasdichten Verbindung der Flansche, d. h. auch außerhalb des Gasraums der Schaltanlage angeordnet ist. Am äußeren Umfang der Ringkerne wird eine Metallhülse angebracht, die den Stromwandler vor Einflüssen von außen, beispielsweise elektrischen Störimpulsen und mechanischer Beschädigung schützen soll. Diese Abdeckhülse kann erst nach der dichten Verbindung der Flansche befestigt werden, da die Entfernung der Flansche voneinander durch die Dicke und Elastizität der zwischen ihnen liegenden Isolierschicht bestimmt ist.

Der vorliegenden Erfindung liegt die Aufgabe zugrunde, eine elektrische Hochspannungsschaltanlage der eingangs genannten Art so auszugestalten, daß mit geringem konstruktiven Aufwand der Ringkörper gasdicht mit den Flanschen verbunden werden kann, wobei gleichzeitig gewährleistet sein muß, daß sich keine leitende, einen Ringkern umgebende geschlossene Leiterschleife ergibt, in der durch den Primärstrom eines Hochspannungsleiters ein hoher Sekundärstrom induziert werden könnte.

Die Aufgabe wird durch die Merkmale des Anspruchs 1 gelöst.

Gegenüber der vorbekannten Konstruktion ist der Stromwandler gemäß der Erfindung insbesondere an seiner radial außenliegenden Seite gut gegen elektromagnetische Impulse geschützt. Dadurch, daß der Ringkörper als von den Flanschen getrenntes Bauteil ausgebildet ist, können beim Aufbau der Hochspannungsschaltanlage unabhängig davon, ob ein Stromwandler vorgesehen ist oder nicht, jeweils dieselben Flansche verwendet werden. Es wird nur in dem Fall, in dem ein Stromwandler vorgesehen ist, ein erfindungsgemäßer Ringkörper zwischen zwei Flansche der Metallkapselung der Schaltanlage eingefügt.

Der Ringkörper weist an seiner dem Inneren der Metallkapselung zugewandten Seite einen umlaufenden Schlitz auf, so daß innerhalb des Ringkörpers keine geschlossene, den Hohlraum und damit den/die in diesem angeordneten Ringkern/e vollständig umgebende Leiterschleife entsteht. Der Schlitz ist möglichst schmal gehalten, um möglichst das Eindringen von elektromagnetischen Störimpulsen aus der Schaltanlage in den ringförmigen Hohlraum zu verhindern.

Eine vorteilhafte Ausgestaltung der Erfindung sieht vor, daß der Ringkörper aus zwei jeweils ringförmigen, im wesentlichen gleich ausgebildeten Teilkörpern besteht, die zwischen sich den ringförmigen Hohlraum einschließen.

Bei dieser Konstruktion kann der Ringkern auf einfache Weise in dem ringförmigen Hohlkörper angeordnet und befestigt werden, und es können dabei im wesentlichen gleich ausgebildete Teilkörper verwendet werden, was den Herstellungsaufwand für diese Teilkörper verringert. Die Teilkörper werden beispielsweise als Gußkörper in derselben Gußform hergestellt und danach durch spanende Bearbeitung mit Nuten versehen, in die Dichtringe eingelegt werden können.

Eine weitere vorteilhafte Ausgestaltung der Erfindung sieht vor, daß die Dichtungen zwischen dem Ringkörper und den Flanschen in dem von dem Hohlraum aus gesehen radial außen liegenden Bereich des Ringkörpers angeordnet sind.

Da normalerweise die Flansche mittels Schraubverbindungen zusammengehalten werden, und da die Schraubverbindungen am äußeren Umfang der Flansche ansetzen, ergibt sich die beste Übertragung der Anpreßkraft durch die Schraubverbindung auf die Dichtungen in dem Falle, wenn die Dichtungen in der Nähe der Schraubverbindungen angeordnet sind. Eventuell auf die Flansche wirkende Seitenkräfte wirken sich dann nicht so stark auf die Dichtungen aus, wie wenn die Dichtungen in großer Entfernung von den Schraubverbindungen radial innen im Metallkapselungsgehäuse angeordnet sind.

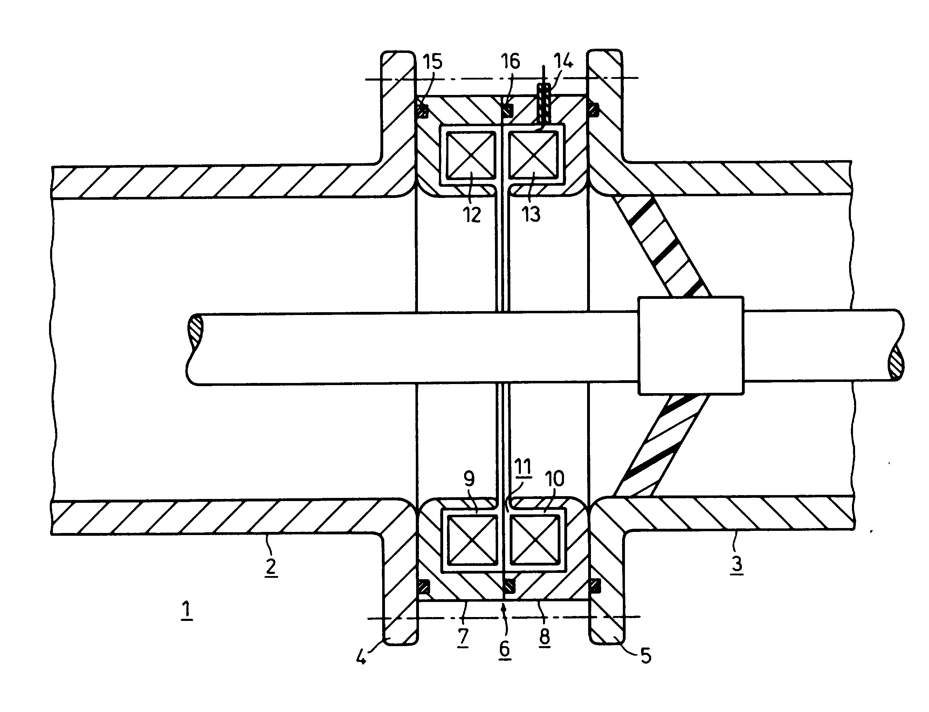

Im folgenden wird die Erfindung anhand eines Ausführungsbeispiels in einer Zeichnung gezeigt und anschließend schrieben. Dabei zeigt die Figur einen Teil eines lungsgehäuses einer Schaltanlage schematisch im schnitt.

Die Metallkapselung 1 der elektrischen Hochspannungsschaltanlage weist zwei Kapselungsteile 2, 3 auf, von denen jedes einen Flansch 4, 5 enthält. Mittels der Flansche 4, 5 können die beiden Kapselungsteile 2, 3 direkt gasdicht miteinander verbunden werden. Es kann aber auch, wie bei dem dargestellten Ausführungsbeispiel, ein Ringkörper 6 zwischen den Flanschen 4, 5 angeordnet sein, der aus zwei Teilkörpern 7, 8 besteht. Die Teilkörper 7, 8 sind im wesentlichen gleich aufgebaut und weisen jeweils an einer Stirnfläche einer Ausnehmung 9, 10 auf, die bei entsprechendem Zusammenbau der Teilkörper 7, 8 einen Teil des ringförmigen Hohlraums 11 bildet. In diesem ringförmigen Hohlraum 11 sind zwei Ringkerne 12, 13 angeordnet, die jeweils eine nicht dargestellte Sekundärwicklung aufweisen und die mit einem Meßanschluß 14 verbunden sind, an den von außerhalb der Metallkapselung ein Meßgerät anschließbar ist.

Die beiden Teilkörper 7, 8 weisen jeweils an einer Stirnfläche Ringnuten 15, 16 zur Aufnahme von Dichtungen auf.

Die Teilkörper 7, 8 können beispielsweise in derselben Form gegossen und danach zur Einbringung der Nuten 15, 16 unterschiedlich spanend bearbeitet werden. Zwischen den Teilkörpern 7, 8 liegt auf der radial innenliegenden Seite des Ringkörpers 6 ein isolierender Spalt. Dieser Spalt dient dazu, eine geschlossene Leiterschleife um die Ringkerne 12, 13 herum zu unterbrechen. Da elektromagnetische Störimpulse, die sich im Inneren der Metallkapselung 1 fortbewegen, durch den Spalt zwischen den Teilkörpern 7, 8 hindurch eine Wirkung auf die Sekundärwicklung der Ringkerne 12, 13 ausüben können, kann es teilweise vorteilhaft sein, den Spalt zwischen den Teilkörpern 7, 8 asymmetrisch in bezug auf die Trennfuge zwischen den Teilkörpern, beispielsweise näher zu dem Flansch 4 als zu dem Flansch 5 zu positionieren. Dies könnte beispielsweise dadurch geschehen, daß an den Teilkörper 8 in dessen radial innengelegenen Bereich ein Metallring befestigt wird und daß von dem Teilkörper 7 durch spanende Bearbeitung im radial innengelegenen Bereich ein Teil entfernt wird.

Der Ringkörper 6 wird mit in die Nuten 15, 16 eingelegten Dichtungen zwischen den Flanschen 4, 5 eingeklemmt und die Flansche 4, 5 werden beispielsweise mit Hilfe von Schrauben fest miteinander verbunden. Es wird somit eine gasdichte Verbindung zwischen dem Ringkörper 6 und den Flanschen 4, 5 geschaffen.

Die Form der Flansche 4, 5 muß nicht an den Stromwandler angepaßt werden, so daß nicht unterschiedliche Typen von Flanschen hergestellt werden müssen, wodurch sich eine Kostenersparnis bei Herstellung und Lagerung der Teile der Hochspannungsschaltanlage ergibt.

## Patentansprüche

1. Elektrische Hochspannungsschaltanlage mit einer Metallkapselung (1), die wenigstens zwei mittels Flanschen (4, 5) gasdicht miteinander verbundene Teile (2, 3) aufweist, und mit einem Ringkernstromwandler, der einen zwischen den Flanschen (4, 5) angeordneten und mit diesen gasdicht verbundenen, einen Hochspannungsleiter umgebenden Ringkörper (6) aufweist, welcher wenigstens einen Ringkern (12, 13) trägt, wobei
der Ringkörper (6) aus Metall besteht sowie einen ringförmigen Hohlraum (11) aufweist, in dem der/die Ringkerne (12, 13) angeordnet ist/sind **dadurch gekennzeichnet,** daß der Ringkörper (6) an seiner dem Inneren der Metallkapselung (1) zugewandten Seite einen umlaufenden Spalt aufweist, der den ringförmigen Hohlraum (11) mit dem Inneren der Metallkapselung (1) verbindet, und daß der Ringkorper (6) als von den Flanschen getrenntes Bauteil ausgebildet ist.

2. Elektrische Hochspannungsschaltanlage nach Anspruch 1,
**dadurch gekennzeichnet,** daß
der Ringkörper (6) aus zwei jeweils ringförmigen, im wesentlichen gleich ausgebildeten Teilkörpern (7, 8) besteht, die zwischen sich den ringförmigen Hohlraum (11) einschließen.

3. Elektrische Hochspannungsschaltanlage nach Anspruch 1 oder 2,
**dadurch gekennzeichnet,** daß
Dichtungen zwischen dem Ringkörper (6) und den Flanschen (4, 5) in dem von dem Hohlraum (11) aus gesehen radial außen liegenden Bereich des Ringkörpers (6) angeordnet sind.

## Claims

1. Electrical high-voltage switchgear having a metal enclosure (1), which has at least two portions (2, 3) which are connected together in a gas-tight manner by means of flanges (4, 5), and having a toroidal-core current transformer which has an annular body (6) which is arranged between the flanges (4, 5), is connected to the latter in a gas-tight manner, surrounds a high-voltage conductor and supports at least one toroidal core (12, 13), wherein the annular body (6) is made of metal and also has an annular cavity (11) in which the toroidal core/cores (12, 13) is/are arranged, characterised in that the annular body (6) has, on its side facing the interior of the metal enclosure (1), a circumferential gap which connects the annular cavity (11) with the interior of the metal enclosure (1), and in that the annular body (6) is formed as a component which is separate from the flanges.

2. Electrical high-voltage switchgear according to claim 1, characterised in that the annular body (6) consists of two partial bodies (7, 8) which are annular in each case, are formed so as to be substantially identical and enclose between them the annular cavity (11).

3. Electrical high-voltage switchgear according to claim 1 or 2, characterised in that seals are arranged between the annular body (6) and the flanges (4, 5) in the area of the annular body (6) which, viewed from the cavity (11), lies radially on the outside.

## Revendications

1. Installation électrique de distribution haute tension comportant un blindage métallique (1), comportant au moins deux parties (2, 3) reliées entre elles de façon étanche au gaz au moyen de flasques (4, 5), et un transformateur d'intensité à noyau toroïdal comportant un corps annulaire (6), qui est disposé entre les deux flasques (4, 5), qui est relié à ces derniers de façon étanche au gaz, qui entoure un conducteur haute tension et qui porte au moins un noyau toroïdal (12, 13), le corps annulaire (6) étant en métal et comportant un espace annulaire creux (11) dans lequel est (sont) disposé(s) le(s) noyau(x) toroïdal(aux) (12,13),
caractérisée par le fait que, du côté orienté vers l'intérieur du blindage métallique (1), le corps annulaire (6) comporte une fente circonférentielle, qui relie l'espace annulaire creux (11) à l'intérieur du blindage métallique (1), et que le corps annulaire (6) est réalisé sous la forme d'un composant séparé des flasques.

2. Installation électrique de distribution haute tension selon la revendication 1,
caractérisée par le fait que le corps annulaire (6) est constitué de deux corps partiels annulaires (7, 8) sensiblement de même structure, qui définissent entre eux l'espace annulaire creux (11).

3. Installation électrique de distribution haute tension selon la revendication 1 ou 2,
caractérisée par le fait que des joints sont disposés entre le corps annulaire (6) et les flasques (4, 5) dans la zone du corps annulaire (6) qui, vue à partir de l'espace creux (11), est située radialement à l'extérieur.
